# EUROPEAN PATENT APPLICATION

(11) **EP 2 468 096 A1**
(43) Date of publication of application: **27.06.2012**
(21) Application number: 10196119.1
(22) Date of filing: 21.12.2010
(51) Int. Cl.: A01N 43/60, A01N 43/40, A01N 43/52, A01N 47/12, A01P 5/00, A61K 31/4184

(54) **Anthelmintic combinations**

(71) Applicant: Intervet International BV, 5831 AN Boxmeer (NL)
(72) Inventor: Chaissaing, Christophe, Pierre, Alain, 55270 Schwabenheim (DE); Heckeroth, Anja, Regina, 55270 Schwabenheim (DE); von Oepen, Britta, 55270 Schwabenheim (DE)
(74) Representative: Stumm, Karin

(57) **Abstract**

The present invention relates to anthelmintic combinations comprising (1) an anthelmintic compound having the general formula (I) 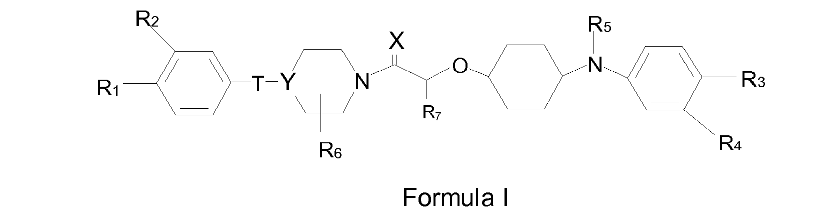 wherein T is a bond and Y is N; orT is NR₈ and Y is CH; X is O or S; R₁ is CF₃, OCF₃, CN or NO₂; R₂ is H or CF₃; R₃ is NO₂ or CN; R₄ is CF₃; R₅ is H or (C₁₋₃)alkyl; R₆ optionally represents 1-4 methyl substituents; R₇ is H or (C₁₋₃)alkyl; R₈ is H or (C₁₋₃)alkyl; or a pharmaceutically acceptable salt thereof; and (2) an anthelmintic benzimidazole carbamate selected from fenbendazole, albendazole (oxide), mebendazole, oxfendazole, parbendazole, oxibendazole, flubendazole and triclabendazole, as well as to the use of said combinations in the treatment of parasitic infections in an animal.

## Description

The present invention relates to anthelmintic combinations and to the use of said combinations in the treatment of parasitic infections in an animal.
[1] Parasitic diseases in animals cause substantial suffering and economic losses throughout the world. Thus, treatment of parasitic infections remains an important global endeavor. The causative organisms include helminths, such as nematodes, cestodes, and trematodes. These organisms can infect, for example, the stomach, intestinal tract, lymphatic system, muscle tissues, kidney, liver, lungs, heart, and brain of animals.
[2] There are many known drugs (or "anthelmintic agents") available to treat various helminith parasite infections, see, *e.g*., McKellar, Q.A., et al., "Veterinary Anthelmintics: old and new," Review: Trends in Parasitology, 20(10), 456-61 (October 2004). These anthelmintic agents treat specifically either nematode, cestode or trematode infections or have a broader anthelmintic spectrum. An example of an anthelmintic agent with sole effect on cestodes (tapeworms) is praziquantel. Some primary nematicidal compounds like fenbendazole, mebendazole, oxfendazole, albendazole have a broader spectrum than nematodes and treat cestode infections as well. Closantel, rafoxanide and triclabendazole are examples of specific compounds for the treatment of trematode infections (flukes).
[3] While many parasitic infections can be treated with known drugs, evolutionary development of resistance by the parasites can render such drugs obsolete over time, see, *e.g*., Jabbar, A., et al., "Anthelmintic resistance: the state of play revisited," Life Sciences, 79, 2413-31 (2006).
[4] In addition, known drugs may have other deficiencies, such as limited spectrum of activity, anthelmintic resistance and the need for repeated treatments. Thus, there still exists a need for new anthelmintic agents or combinations of anthelmintic agents to ensure safe, effective, and convenient treatment of a wide range of endoparasitic infections over a long period of time.
[5] Recently, compounds were disclosed in the international patent application WO 2009/077527 (Intervet International B.V.) that can generally be used as anthelmintics, and particularly so for the treatment of nematode infections.
[6] The present invention is based on the surprising finding that an anthelmintic combination comprising (1) an anthelmintic compound having the general Formula (I) 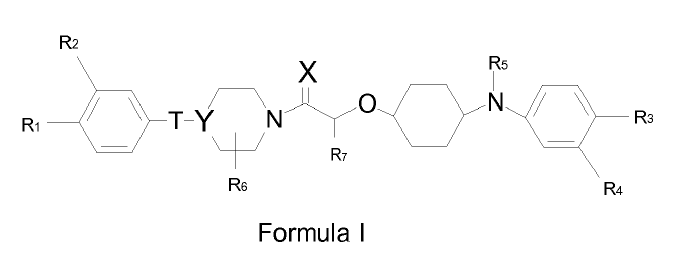 wherein
T is a bond and Y is N; or
T is NR₈ and Y is CH;
X is O or S;
R₁ is CF₃, OCF₃, CN or NO₂;
R₂ is H or CF₃;
R₃ is NO₂ or CN;
R₄ is CF₃;
R₅ is H or (C₁₋₃)alkyl;
R₆ optionally represents 1-4 methyl substituents;
R₇ is H or (C₁₋₃)alkyl;
R₈ is H or (C₁₋₃)alkyl;
and comprising (2) an anthelmintic benzimidazole carbamate (compound II) selected from fenbendazole, albendazole (oxide), mebendazole, oxfendazole, parbendazole, oxibendazole, flubendazole and triclabendazole, shows a synergistic effect against helminths after administration to animals. The effect against helminths of the combination is greater than the activities of the compounds when administered separately, and the combination is safe for administration to animals.
[7] The anthelmintic compounds having the general Formula (I) are a selection amongst the compounds disclosed in WO 2009/077527 (supra).
[8] The term (C₁₋₃)alkyl as used in the definition of Formula I means a branched or unbranched alkyl group having 1-3 carbon atoms, like propyl, isopropyl, ethyl and methyl.
[9] Preferred anthelmintic combinations of the invention comprise the anthelmintic benzimidazole carbamate fenbendazole or triclabendazole.
[10] Preferred anthelmintic compounds of Formula I have the trans-configuration at the cyclohexyl ring.
[11] Further preferred are anthelmintic combinations of the invention comprising a compound of Formula I wherein T is a bond and Y is N.
[12] Also preferred are the compounds of Formula I wherein X is O and R₅ is H.
[13] More preferred are the compounds of Formula I wherein R₁ is CF₃, R₃ is NO₂ and R₄ is CF₃.
[14] Particular preferred anthelmintic compounds of Formula I for use in the combination of the invention are selected from the group consisting of: 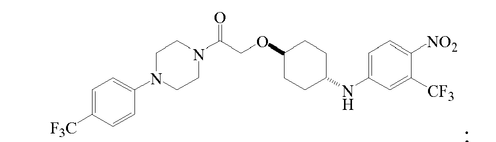 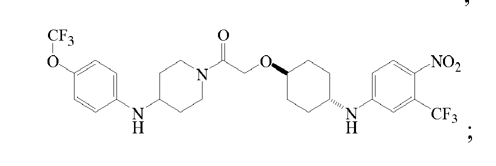 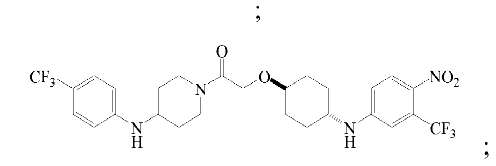 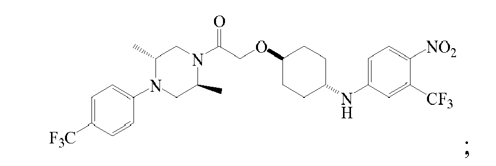 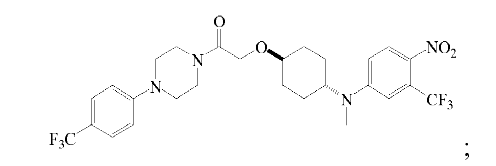 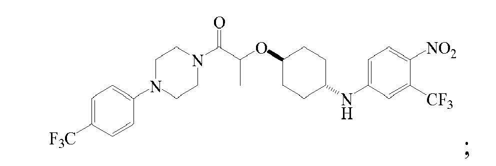 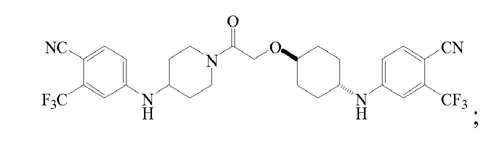 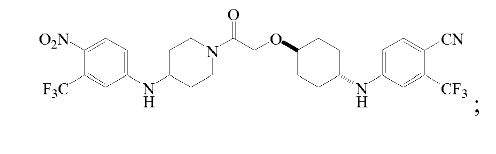 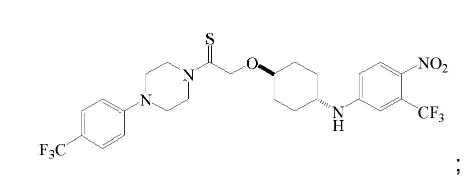 and 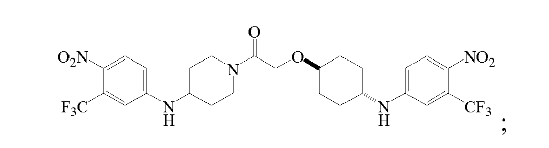 or a pharmaceutically acceptable salt thereof.
An especially preferred anthelmintic compound for use in the combination of the invention is 2-[*trans*-4-(4-nitro-3-trifluoromethyl-phenylamino)-cyclohexyloxy]-1-[4-(4-trifluoromethyl-phenyl)-piperazin-1-yl]-ethanone, or a pharmaceutically acceptable salt thereof.
[15] In the contemplated use of the anthelmintic combinations of the present invention, the active anthelmintic compounds may be administered simultaneously or sequentially. In addition, it is contemplated that the combination of the present invention may comprise further active ingredient(s).
[16] The further active ingredient(s) may target the same and/or different parasites and conditions. Contemplated active ingredient(s) that may be administered either simultaneously or sequentially with the combination of the present invention may include, for example, pharmaceutically acceptable anthelmintics, insecticides and acaricides, insect growth regulators, anti-inflammatories, anti-infectives, hormones, dermatological preparations (*e.g*. antiseptics and disinfectants), and immunobiologicals (*e.g*. vaccines and antisera) for disease prevention.
[17] Therefore this invention is also directed to the use as a medicament of combinations comprising a) an anthelmintic compound according to Formula I (b) a benzimidazole carbamate anthelmintic compound and (c) a further active anthelmintic compound, more preferably selected from the group consisting of avermectins (*e.g*. ivermectin, selamectin, doramectin, abamectin and eprinomectin); milbemycins (moxidectin and milbemycin oxime); pro-benzimidazoles (*e.g*. febantel, netobimin and thiophanate); benzimidazole derivatives, such as a thiazole benzimidazole derivative (*e.g*. thiabendazole and cambendazole); imidazothiazoles (*e.g*. levamisole and tetramisole); tetrahydropyrimidines (morantel and pyrantel), organophosphates (*e.g*. trichlorphon, haloxon, dichlorvos and naphthalophos); salicylanilides (*e.g*. closantel, oxyclozanide, rafoxanide and niclosamide); nitrophenolic compounds (*e.g*. nitroxynil and nitroscanate); benzenedisulphonamides (*e.g*. clorsulon); pyrazineisoquinolines (*e.g*. praziquantel and epsiprantel); heterocyclic compounds (*e.g*. piperazine, diethylcarbamazine and phenothiazine); arsenicals (*e.g*. thiacetarsamide, melorsamine and arsenamide); cyclooctadepsipeptides (*e.g*. emodepside); paraherquamides ( e.g*.* derquantel); and amino-acetonitrile compounds (e.g. monepantel, AAD 1566); tribendimidine (amidine compound); amidine compounds (e.g. amidantel and tribendimidin), including all pharmaceutically acceptable forms, such as salts, solvates or N-oxides.
[18] The weight ratio of the active ingredients in the combinations of the invention may vary widely. Factors influencing this ratio include, for example, the particular compounds; the identity of the other active ingredient(s) to be administered in the combination therapy; the dosage route of the compounds and other active ingredient(s); the target condition and pathogen; the type (*e.g*. species and breed), age, size, sex, diet, activity, and condition of the animal; and pharmacological considerations, such as the activity, efficacy, pharmacokinetic, and toxicology profiles of the compounds and other active ingredient(s). In some contemplated embodiments, for example, the weight ratio of the anthelmintic compound of Formula I to the anthelmintic benzimidazole carbamate is, for example, is from about 1:3000 to about 3000:1. In some such instances, the weight ratio is from about 1:300 to about 300:1. In other such instances, the weight ratio is from about 1:30 and about 30:1
[19] Moreover, we have found that simultaneous, that is joint or separate, application of one ore more active compound of formula I and one or more of other anthelmintic compounds or successive application of one or more active compounds of formula I and one or more anthelmintics allows enhanced control of helminthes compared to control of the control rates that are possible with the individual compounds.
[20] Such further active anthelmintic compounds, are more preferably selected from the group consisting of avermectins (*e.g*. ivermectin, selamectin, doramectin, abamectin and eprinomectin); milbemycins (moxidectin and milbemycin oxime); pro-benzimidazoles (*e.g*. febantel, netobimin and thiophanate); benzimidazole derivatives, such as a thiazole benzimidazole derivative (*e.g*. thiabendazole and cambendazole); imidazothiazoles (*e.g*. levamisole and tetramisole); tetrahydropyrimidines (morantel and pyrantel), organophosphates (*e.g*. trichlorphon, haloxon, dichlorvos and naphthalophos); salicylanilides (*e.g*. closantel, oxyclozanide, rafoxanide and niclosamide); nitrophenolic compounds (*e.g*. nitroxynil and nitroscanate); benzenedisulphonamides (*e.g*. clorsulon); pyrazineisoquinolines (*e.g*. praziquantel and epsiprantel); heterocyclic compounds (*e.g*. piperazine, diethylcarbamazine and phenothiazine); arsenicals (*e.g*., thiacetarsamide, melorsamine and arsenamide); cyclooctadepsipeptides (*e.g*. emodepside); paraherquamides ( e.g. derquantel); and amino-acetonitrile compounds (e.g. monepantel, AAD 1566); tribendimidine (amidine compound); amidine compounds (e.g. amidantel and tribendimidin), including all pharmaceutically acceptable forms, such as salts, solvates or N-oxides.
[21] Specific compounds are outlined in Table 1 below.

| **Compound ID** | **Structure** |
|---|---|
| 1-1 | 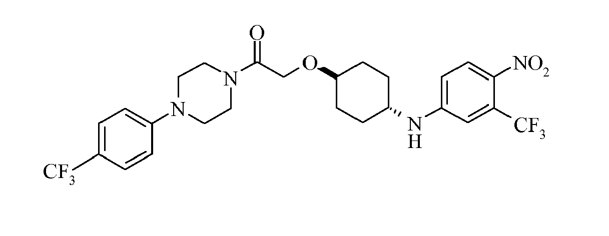 |
| 1-2 | 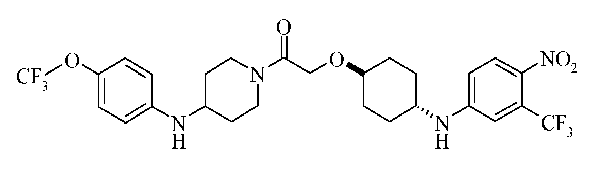 |
| 1-3 | 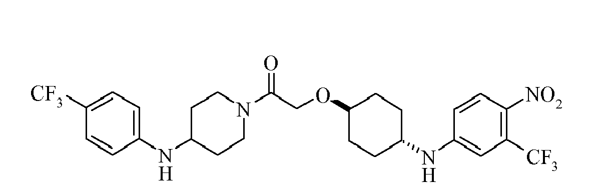 |
| 1-4 | 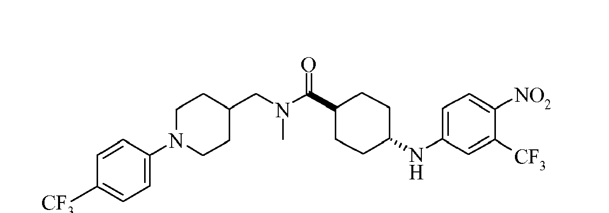 |
| 1-5 | 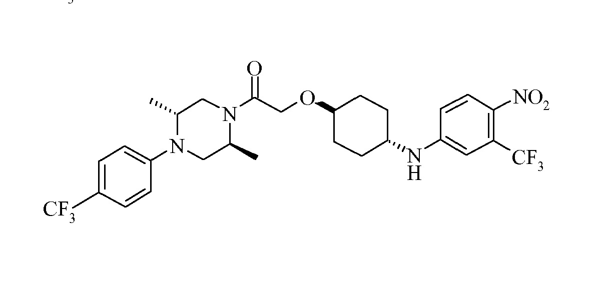 |
| 1-6 | 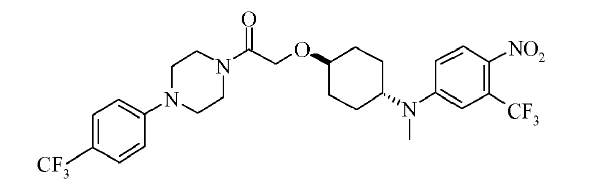 |
| 1-7 | 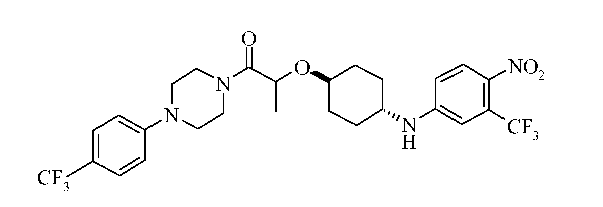 |
| 1-8 | 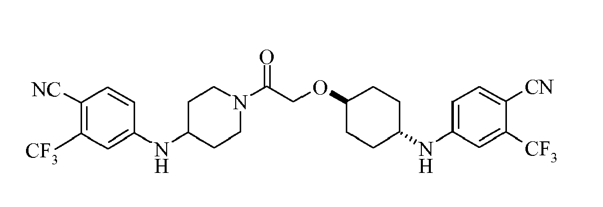 |
| 1-9 | 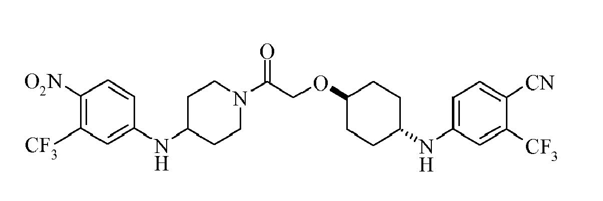 |
| 1-10 | 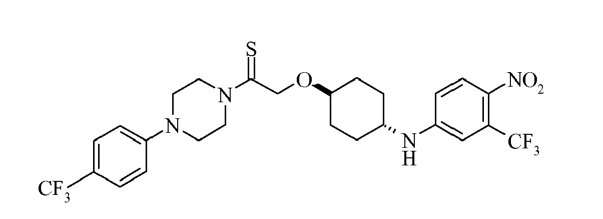 |
| 1-11 | 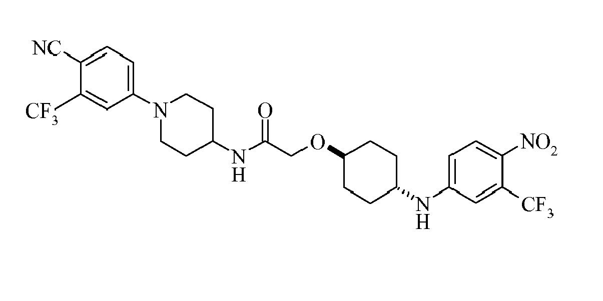 |
| 1-12 | 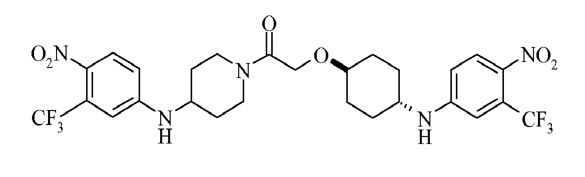 |

[22] Specific combinations are outlined are outlined in Table 2 below

| Combination | Compound of table 1 | Compound II | Combination | Compound of table 1 | Compound II |
|---|---|---|---|---|---|
| M-1 | 1-1 | Fenbendazole | M-49 | 1-1 | Levamisole |
| M- 2 | 1-2 | Fenbendazole | M-50 | 1-2 | Levamisole |
| M-3 | 1-3 | Fenbendazole | M-51 | 1-3 | Levamisole |
| M-4 | 1-4 | Fenbendazole | M-52 | 1-4 | Levamisole |
| M-5 | 1-5 | Fenbendazole | M-53 | 1-5 | Levamisole |
| M-6 | 1-6 | Fenbendazole | M-54 | 1-6 | Levamisole |
| M-7 | 1-7 | Fenbendazole | M-55 | 1-7 | Levamisole |
| M-8 | 1-8 | Fenbendazole | M-56 | 1-8 | Levamisole |
| M-9 | 1-9 | Fenbendazole | M-57 | 1-9 | Levamisole |
| M-10 | 1-10 | Fenbendazole | M-58 | 1-10 | Levamisole |
| M-11 | 1-11 | Fenbendazole | M-59 | 1-11 | Levamisole |
| M-12 | 1-12 | Fenbendazole | M-60 | 1-12 | Levamisole |
| M-13 | 1-1 | Triclabendazole | M-61 | 1-1 | Monepantel |
| M-14 | 1-2 | Triclabendazole | M-62 | 1-2 | Monepantel |
| M-15 | 1-3 | Triclabendazole | M-63 | 1-3 | Monepantel |
| M-16 | 1-4 | Triclabendazole | M-64 | 1-4 | Monepantel |
| M-17 | 1-5 | Triclabendazole | M-65 | 1-5 | Monepantel |
| M-18 | 1-6 | Triclabendazole | M-66 | 1-6 | Monepantel |
| M-19 | 1-7 | Triclabendazole | M-67 | 1-7 | Monepantel |
| M-20 | 1-8 | Triclabendazole | M-68 | 1-8 | Monepantel |
| M-21 | 1-9 | Triclabendazole | M-69 | 1-9 | Monepantel |
| M-22 | 1-10 | Triclabendazole | M-70 | 1-10 | Monepantel |
| M-23 | 1-11 | Triclabendazole | M-71 | 1-11 | Monepantel |
| M-24 | 1-12 | Triclabendazole | M-72 | 1-12 | Monepantel |
| M-25 | 1-1 | Ivermectin | M-73 | 1-1 | Derquantel |
| M-26 | 1-2 | Ivermectin | M-74 | 1-2 | Derquantel |
| M-27 | 1-3 | Ivermectin | M-75 | 1-3 | Derquantel |
| M-28 | 1-4 | Ivermectin | M-76 | 1-4 | Derquantel |
| M-29 | 1-5 | Ivermectin | M-77 | 1-5 | Derquantel |
| M-30 | 1-6 | Ivermectin | M-78 | 1-6 | Derquantel |
| M-31 | 1-7 | Ivermectin | M-79 | 1-7 | Derquantel |
| M-32 | 1-8 | Ivermectin | M-80 | 1-8 | Derquantel |
| M-33 | 1-9 | Ivermectin | M-81 | 1-9 | Derquantel |
| M-34 | 1-10 | Ivermectin | M-82 | 1-10 | Derquantel |
| M-35 | 1-11 | Ivermectin | M-83 | 1-11 | Derquantel |
| M-36 | 1-12 | Ivermectin | M-84 | 1-12 | Derquantel |
| M-37 | 1-1 | Moxidectin | M-85 | 1-1 | Praziquantel |
| M-38 | 1-2 | Moxidectin | M-86 | 1-2 | Praziquantel |
| M-39 | 1-3 | Moxidectin | M-87 | 1-3 | Praziquantel |
| M-40 | 1-4 | Moxidectin | M-88 | 1-4 | Praziquantel |
| M-41 | 1-5 | Moxidectin | M-89 | 1-5 | Praziquantel |
| M-42 | 1-6 | Moxidectin | M-90 | 1-6 | Praziquantel |
| M-43 | 1-7 | Moxidectin | M-91 | 1-7 | Praziquantel |
| M-44 | 1-8 | Moxidectin | M-92 | 1-8 | Praziquantel |
| M-45 | 1-9 | Moxidectin | M-93 | 1-9 | Praziquantel |
| M-46 | 1-10 | Moxidectin | M-94 | 1-10 | Praziquantel |
| M-47 | 1-11 | Moxidectin | M-95 | 1-11 | Praziquantel |
| M-48 | 1-12 | Moxidectin | M-96 | 1-12 | Praziquantel |
| M-97 | 1-1 | Pyrantel | M-135 | 1-1 | Milbemycin |
| M-98 | 1-2 | Pyrantel | M-136 | 1-2 | Milbemycin |
| M-99 | 1-3 | Pyrantel | M-137 | 1-3 | Milbemycin |
| M-100 | 1-4 | Pyrantel | M-138 | 1-4 | Milbemycin |
| M-101 | 1-5 | Pyrantel | M-139 | 1-5 | Milbemycin |
| M-102 | 1-6 | Pyrantel | M-140 | 1-6 | Milbemycin |
| M-103 | 1-7 | Pyrantel | M-141 | 1-7 | Milbemycin |
| M-104 | 1-8 | Pyrantel | M-142 | 1-8 | Milbemycin |
| M-105 | 1-9 | Pyrantel | M-143 | 1-9 | Milbemycin |
| M-106 | 1-10 | Pyrantel | M-144 | 1-10 | Milbemycin |
| M-107 | 1-11 | Pyrantel | M-145 | 1-11 | Milbemycin |
| M-108 | 1-12 | Pyrantel | M-146 | 1-12 | Milbemycin |
| M-109 | 1-1 | Emodepside | M-147 | 1-1 | Flubendazole |
| M-110 | 1-2 | Emodepside | M-148 | 1-2 | Flubendazole |
| M-111 | 1-3 | Emodepside | M-149 | 1-3 | Flubendazole |
| M-112 | 1-4 | Emodepside | M-150 | 1-4 | Flubendazole |
| M-113 | 1-5 | Emodepside | M-151 | 1-5 | Flubendazole |
| M-114 | 1-6 | Emodepside | M-152 | 1-6 | Flubendazole |
| M-115 | 1-7 | Emodepside | M-153 | 1-7 | Flubendazole |
| M-116 | 1-8 | Emodepside | M-154 | 1-8 | Flubendazole |
| M-117 | 1-9 | Emodepside | M-155 | 1-9 | Flubendazole |
| M-118 | 1-10 | Emodepside | M-156 | 1-10 | Flubendazole |
| M-119 | 1-11 | Emodepside | M-157 | 1-11 | Flubendazole |
| M-110 | 1-12 | Emodepside | M-158 | 1-12 | Flubendazole |
| M-111 | 1-1 | Eprinomectin | M-159 | 1-1 | Closantel |
| M-112 | 1-2 | Eprinomectin | M-160 | 1-2 | Closantel |
| M-113 | 1-3 | Eprinomectin | M-161 | 1-3 | Closantel |
| M-114 | 1-4 | Eprinomectin | M-162 | 1-4 | Closantel |
| M-115 | 1-5 | Eprinomectin | M-163 | 1-5 | Closantel |
| M-116 | 1-6 | Eprinomectin | M-164 | 1-6 | Closantel |
| M-117 | 1-7 | Eprinomectin | M-165 | 1-7 | Closantel |
| M-118 | 1-8 | Eprinomectin | M-166 | 1-8 | Closantel |
| M-119 | 1-9 | Eprinomectin | M-1671 | 1-9 | Closantel |
| M-120 | 1-10 | Eprinomectin | M-168 | 1-10 | Closantel |
| M-121 | 1-11 | Eprinomectin | M-169 | 1-11 | Closantel |
| M-122 | 1-12 | Eprinomectin | M-170 | 1-12 | Closantel |
| M-123 | 1-1 | Rafoxanide | M-171 | 1-1 | Abamectin |
| M-124 | 1-2 | Rafoxanide | M-172 | 1-2 | Abamectin |
| M-125 | 1-3 | Rafoxanide | M-173 | 1-3 | Abamectin |
| M-126 | 1-4 | Rafoxanide | M-174 | 1-4 | Abamectin |
| M-127 | 1-5 | Rafoxanide | M-175 | 1-5 | Abamectin |
| M-128 | 1-6 | Rafoxanide | M-176 | 1-6 | Abamectin |
| M-129 | 1-7 | Rafoxanide | M-177 | 1-7 | Abamectin |
| M-130 | 1-8 | Rafoxanide | M-178 | 1-8 | Abamectin |
| M-131 | 1-9 | Rafoxanide | M-179 | 1-9 | Abamectin |
| M-132 | 1-10 | Rafoxanide | M-180 | 1-10 | Abamectin |
| M-133 | 1-11 | Rafoxanide | M-181 | 1-11 | Abamectin |
| M-134 | 1-12 | Rafoxanide | M-182 | 1-12 | Abamectin |

[23] The anthelmintic combinations of the invention may generally be used as a medicament for animals. In some embodiments of this invention such anthelmintic combination according to this invention is administered to treat infections such as parasitic infections (e.g. helminth infections) of an animal or make a medicament to treat infections such as parasitic infections of an animal. In one embodiment such combination according to this invention is administered to treat parasitoses of an animal or make a medicament to treat parasitoses of an animal.
[24] The term "(parasitic) infection" includes conditions associated with or caused by one or more (parasitic) pathogens; said conditions include clinical conditions (parasitoses) and sub-clinical conditions. The term "treatment of parasitic infection" thus includes both the treatment of parasitoses and the treatment of sub-clinical conditions. The treatment of a parasite infection generally implies the suppression of parasite (e.g. helminth) burdens in the animal below that level at which economic loss occurs.
[25] Sub-clinical conditions are typically conditions not directly leading to clinical symptoms in the parasite infected animal but leading to economic losses. Such economic losses can be e.g. depression of growth in young animals, lower feed efficiency, lower weight gain in meat producing animals, lower milk production in ruminants, lower egg production in laying hens, or lower wool-production in sheep.
[26] The term "parasitoses" relates to clinically manifest pathologic conditions and diseases associated with or caused by an infection by one or more parasites, such as, for example parasitic gastroenteritis or anemia in ruminants e.g. sheep and goats or colic in horses.
[27] In general, the prevention or treatment of parasitic infection including parasitoses is achieved by administering an anthelmintic combination according to this invention to treat a parasitic infection such as a helminth infection.
[28] Thus the invention provides a method of treating a (parasitic) infection such as a helminth infection, including parasitoses, which comprises administering to the animal an antiparasitically, preferably an anthelmintically, effective amount of an anthelmintic combination according to this invention. Preferably nematode, cestode or trematode infections are treated, more preferably nematode infections.
[29] "Treating (parasitic) infections" includes treating parasitoses and means to partially or completely inhibit the development of (parasitic) infections of an animal susceptible to (parasitic) infection, reduce or completely eliminate the symptoms of infections of an animal having infections, and/or partially or completely cure infections of an animal having infections. This can be achieved by alleviating or reducing pathogen numbers such as parasite numbers in an animal.
[30] The effect of the anthelmintic combination according to this invention can be e.g. ovicidal, larvicidal, and/or adulticidal or a combination thereof. The effect can manifest itself directly, i.e. killing the parasites either immediately or after some time has elapsed, for example when molting occurs, or by destroying their eggs, or indirectly, e.g. reducing the number of eggs laid and/or the hatching rate. Alternatively the parasite is not killed but paralyzed and is then dislodged and excreted by the host animal.
[31] In another aspect the present invention thus provides a pharmaceutical composition comprising an anthelmintically effective amount of a combination according to this invention and one or more pharmaceutically acceptable excipients.
[32] The anthelmintic combinations according to this invention are useful in treating parasitic infections such as helminth infections of animals. An "effective amount" is the amount or quantity of a compound that is required to alleviate or reduce parasite numbers in an animal, and/or to inhibit the development of parasite infections in an animal, in whole or in part.
[33] This amount is readily determined by observation or detection of the pathogen numbers such as parasite numbers both before and after contacting the sample of pathogens such as parasites including their stages with the compound according to this invention, directly and/or indirectly, e.g., by contacting articles, surfaces, foliage, or animals with the compound e.g. the parasite count is reduced, after a first administration, by an amount ranging from 5% to about 100%.
[34] This can be evaluated by counting parasites (especially helminthes) directly after necroscopy of the host animal.
[35] The reduction of parasite numbers, especially gastrointestinal helminth parasites can be alternatively measured in-directly by faecal egg or differential larval counts. In this case the effective amount of the compound is determined by the reduction of the number of excreted helminth eggs or larvae in the faeces of the treated animal before and after treatment. For an *in vivo* administration the anthelmintic combination according to this invention, is preferably administered to an animal in an effective amount which is synonymous with "pharmaceutically effective amount" or "anthelmintically effective amount".
[36] A single administration of an anthelmintic combination according to this invention is typically sufficient to treat a parasitic infection such as a helminth infection, preferably a nematode, cestode or trematode infection, more preferably a nematode infection. Although such a single dose is typically preferred, it is contemplated that multiple doses can be used. When the anthelmintic combination according to this invention is orally administered, the total dose to treat a disease, such as a helminth infection, is generally greater than about 0.01 mg/kg (i.e., milligram of each anthelmintic compound of the combination of this invention per kilogram body weight of the treated animal). In some such embodiments, the total dose is from about 0.01 to about 100 mg/kg, from about 0.01 to about 50 mg/kg, from about 0.1 to about 25 mg/kg, or from about 1 to about 20 mg/kg. For sheep, for example, the dose is generally from about 0.5 to about 15 mg/kg, from about 1 to about 10 mg/kg. The same dose range may be suitable for other dosage routes. For example, in some embodiments, the same dose range is used for subcutaneous administration. The desired dose, however, may be less in some instances where the anthelmintic combination according to this invention is administered intravenously.
[37] If the anthelmintic combination of this invention is administered parenterally via an injection, the amount of the combination in the dosage form preferably is sufficient to provide the desired therapeutically effective amount of the combination according to this invention in a volume that is acceptable for parenteral administration.
[38] Factors affecting the preferred dosage may include, for example, the parasite species infection to be treated and the development stages of the parasites, the type (*e.g*., species and breed), age, size, sex, diet, activity, and condition of the of the infected animal; the dosage route; pharmacological considerations, such as the activity, efficacy, pharmacokinetic, and toxicology profiles of the particular composition administered. Thus, the preferred amount of the combinations according to this invention can vary, and, therefore, can deviate from the typical dosages set forth above. Determining such dosage adjustments is generally within the skill of those in the art.
[39] In a preferred embodiment the anthelmintic combinations according to this invention are used to treat a helminth infection, such as an infection caused by one or more helminths selected from the group consisting of a) cestodes: e.g. *Anaplocephala* spp.; *Dipylidium* spp.; *Diphyllobothrium* spp.; *Echinococcus* spp.; *Moniezia* spp.; *Taenia* spp.; b) trematodes e.g. *Dicrocoelium* spp.; *Fasciola* spp.; *Paramphistomum* spp.; *Schistosoma* spp.; or c) nematodes, e.g. ; *Ancylostoma* spp.; *Anecator* spp.; *Ascaridia* spp.; *Ascaris* spp.; *Brugia* spp.; *Bunostomum* spp.; *Capillaria* spp.; *Chabertia* spp.; *Cooperia* spp.; *Cyathostomum* spp.; *Cylicocyclus* spp.; *Cylicodontophorus* spp.; *Cylicostephanus* spp.; *Craterostomum* spp.; *Dictyocaulus* spp.; *Dipetalonema* spp; *Dirofilaria* spp.; *Dracunculus* spp.; *Enterobius* spp.; *Filaroides* spp.; *Habronema* spp.; *Haemonchus* spp.; *Heterakis* spp.; *Hyostrongylus* spp.; *Metastrongylus* spp.; *Meullerius* spp. *Necator spp*.; *Nematodirus* spp.; *Nippostrongylus* spp.; *Oesophagostomum* spp.; *Onchocerca* spp.; *Ostertagia* spp.; *Oxyuris* spp.; *Parascaris spp.;Stephanurus* spp.; *Strongylus* spp.; *Syngamus* spp.; *Toxocara* spp.; *Strongyloides* spp.; *Teladorsagia* spp.; *Toxascaris* spp.; *Trichinella* spp.; *Trichuris* spp.; *Trichostrongylus* spp.; *Triodontophorous* spp.; *Uncinaria* spp., and/or *Wuchereria* spp..
[40] The anthelmintic combinations of the present invention are especially suitable for the treatment of parasitic infections caused by a nematode and particularly useful for treating nematode infections caused by at least one of *Trichostrongylus axei*, *Trichostrongylus colubriformis, Haemonchus contortus, Ascaridia galli*, and/or *Oesophagostomum dentatum.*
[41] It is contemplated that the anthelmintic combinations according to this invention may be used to treat animals, including humans and non-human animals, especially non-human mammals. Such non-human mammals include, for example, livestock mammals (*e.g*., swine, livestock ruminats like bovines, sheep, goats, etc.), laboratory mammals (*e.g*., mice, rats, jirds, etc.), companion mammals (*e.g*., dogs, cats, equines, etc.), and wild and zoo mammals (*e.g*., buffalo, deer, etc.). It is contemplated that the compounds according to this invention also are suitable to treat non-mammals, such as poultry (*e.g*., turkeys, chickens, ducks, etc.) and fish (e.g., salmon, trout, koi, etc.).
[42] The combinations according to this invention may be administered in various dosage forms. The term "dosage form" means that the compounds of the combination according to this invention are formulated into a product suitable for administering to the animal via the envisaged dosage route. Such dosage forms are sometimes referred to herein as formulations or pharmaceutical composition.
[43] The formulation type chosen for a dosage form in any instance will depend upon the particular purpose envisaged and the physical, chemical and biological properties of the compounds of the combination according to this invention.
[44] Dosage forms useful in the current invention can be liquid, semi-solid or solid dosage forms.
[45] Liquid dosage forms of the compounds are generally solutions, suspensions or emulsions. A solution is a mixture of two or more components that form a single phase that is homogeneous down to the molecular level. A suspension consists of insoluble solid particles dispersed in a liquid medium, with the solid particles accounting for about 0.5% to about 30% of the suspension. The liquid may be aqueous, oily, or both. An emulsion is a heterogeneous dispersion of one immiscible liquid in another; it relies on an emulsifying agent for stability. A dry powder (or granule) for reconstitution is reconstituted as a solution or as a suspension immediately prior to injection. The principal advantage of this dosage form is that it overcomes the problem of instability in solution or suspension.
[46] One possible dosage route is the oral dosage route, wherein the compounds of the anthelmintic combination according to this invention is administered via the mouth. Oral dosage forms suitable for oral administration comprise liquids (e.g.drench or drinking water formulations), semi-solids (e.g.pastes, gels), and solids (e.g.tablets, capsules, powders, granules, chewable treats, premixes and medicated blocks).
[47] A drench is a liquid oral formulation that is administered directly into the mouth/throat of an animal, especially a livestock animal, by means of a "drench gun" or syringe or another suitable device. When the composition is administered in the animal recipient's drinking water or as a drench, it may be convenient to use a solution or suspension formulation. This formulation can be, for example, a concentrated suspension that is mixed with water or a dry preparation that is mixed and suspended in the water.
[48] Semi-solid oral formulations (pastes or gels) are generally administered via an applicator directly into the mouth of an animal or mixed with the feed.
[49] Solid oral formulations are either administered directly to an animal (tablet, capsule) or mixed with the feed or via medicated feed blocks.
[50] When the oral formulation is administered via a non-human animal's feed, it may, for example, be fed as a discrete feed or as a chewable treat. Alternatively (or additionally), it may, for example, be intimately dispersed in the animal recipient's regular feed, used as a top dressing, or in the form of solid pellets, paste or liquid that is added to the finished feed. When the oral formulation is administered as a feed additive, it may be convenient to prepare a "premix" in which the oral formulation is dispersed in a liquid or solid carrier. This "premix" is, in turn, dispersed in the animal's feed using, for example, a conventional mixer.
[51] Several modified-release delivery systems have been developed, that take advantage of the unique anatomy of the ruminant forestomach, i.e. for intra-ruminal administration. An intraruminal bolus is a specific formulation for ruminants (cattle, sheep, goats, buffalos, camelids, deer etc). It is a veterinary delayed release delivery system which remains in the rumeno-reticular sac of a ruminant animal over an extended period of time and in which the therapeutically active substance has a predictable and delayed release pattern. Such intraruminal boluses are usually administered using a balling gun or another suitable device.
[52] It is contemplated that an anthelmintic combination according to this invention may alternatively be administered via non-oral dosage routes, such as topically (*e.g*., via a spot-on, pour-on or transdermal patch), or parenterally (*e.g*., subcutaneous injection, intravenous injection, intramuscular injection, etc.).
[53] For instance an anthelmintic combination according to this invention may be administered topically using a transdermal formulation (i.e. a formulation that passes through the skin). Alternatively the anthelmintic combination according to this invention may be administered topically via the mucosa.
[54] Topical dosage forms suitable for topical administration comprise liquids (e.g. bath, spray, spot-on), semi-solids (e.g. creams, gels), and solids (e.g. patches, powders, collars). Typical topical formulations for animals are liquid or semi-liquid dosage forms. Typical formulations for transdermal and mucosal administration include, for example, pour-ons, spot-ons, dips, sprays, mousses, shampoos, powders, gels, hydrogels, lotions, solutions, creams, ointments, dusting powders, dressings, foams, films, skin patches, limb bands, collars, ear tags, wafers, sponges, fibers, bandages, and microemulsions. When a liquid formulation is used topically on skin, it can be administered by, for example, pouring on (pour-on or spot-on), spreading, rubbing, atomizing, spraying, dipping, bathing, or washing.
[55] The pour-on or spot-on methods, for example, comprise applying the formulation to a specific location of the skin or coat, such as on the neck or backbone of the animal. This may be achieved by, for example, applying a swab or drop of the pour-on or spot-on formulation to a relatively small area of the recipient animal's skin or coat (i.e., generally no greater than about 10% of the animal recipient's skin or coat). In some embodiments, the compound according to this invention is dispersed from the application site to wide areas of the fur due to the spreading nature of the components in the formulation and the animal's movements while, in parallel, being absorbed through the skin and distributed via the animal recipient's fluids and/or tissues.
[56] Parenteral formulations and delivery systems for non-oral routes comprise liquids (e.g. solutions, suspensions, emulsions, and dry powders for reconstitution), semi-solids and solids (e.g.implants). The majority of implants that are used in veterinary medicine are compressed tablets or dispersed matrix systems in which the drug is uniformly dispersed within a nondegradable polymer or alternatively extrusion products.
[57] This invention also is directed to pharmaceutical compositions (or medicaments) comprising an anthelmintic combination according to this invention. The compositions also may (and preferably will) comprise one or more pharmaceutically acceptable excipients, such as exemplified below.
[58] Pharmaceutical compositions of the present invention may be manufactured by, for example, processes known in the art. These processes include, for example, a variety of known mixing, dissolving, granulating, emulsifying, encapsulating, entrapping, and lyophilizing processes. Optimal formulation depends on, for example, the dosage route (e.g. oral, injection, topical).
[59] Solid dosage forms, for example, may be prepared by, for example, intimately and uniformly mixing the compounds with fillers, binders, lubricants, glidants, disintegrants, flavoring agents (*e.g*., sweeteners), buffers, preservatives, pharmaceutical-grade dyes or pigments, and controlled release agents.
[60] Oral dosage forms other than solids may be prepared by mixing the compounds with, for example, one or more solvents, viscosity-enhancing agents, surfactants, preservatives, stabilizers, resins, fillers, binders, lubricants, glidants, disintegrants, co-solvents, sweeteners, flavorings, perfuming agents, buffers, suspending agents, and pharmaceutical-grade dyes or pigments.
[61] Contemplated binders include, for example, gelatin, acacia, and carboxymethyl cellulose.
[62] Contemplated lubricants include, for example, magnesium stearate, stearic acid, and talc.
[63] Contemplated disintegrants include, for example, corn starch, alginic acid, sodium carboxymethylcellulose, and sodium croscarmellose.
[64] Contemplated buffers include, for example, sodium citrate, and magnesium and calcium carbonate and bicarbonate.
[65] Contemplated solvents include, for example, water, petroleum, animal oils, vegetable oils, mineral oil, and synthetic oil. Physiological saline solution or glycols (*e.g*., ethylene glycol, propylene glycol, or polyethylene glycol) also may be included. The solvent preferably has sufficient chemical properties and quantity to keep the compounds solubilized at temperatures in which the composition is stored and used.
[66] Contemplated viscosity-enhancing agents include, for example, polyethylene, methylcellulose, sodium carboxymethylcellulose, hydroxypropylmethylcellulose, hydroxypropylcellulose, sodium alginate, carbomer, povidone, acacia, guar gum, xanthan gum, tragacanth, methylcellulose, carbomer, xanthan gum, guar gum, povidone, sodium carboxymethylcellulose, magnesium aluminum silicate, carboxyvinyl polymers, carrageenan, hydroxyethyl cellulose, laponite, water-soluble salts of cellulose ethers, natural gums, colloidal magnesium aluminum silicateor finely divided silica, homopolymers of acrylic acid crosslinked with an alkyl ether of pentaerythritol or an alkyl ether of sucrose, and carbomers.
[67] Contemplated surfactants include, for example, polyoxyethylene sorbitan fatty acid esters; polyoxyethylene monoalkyl ethers; sucrose monoesters; lanolin esters and ethers; alkyl sulfate salts; and sodium, potassium, and ammonium salts of fatty acids.
[68] Contemplated preservatives include, for example, phenol, alkyl esters of parahydroxybenzoic acid (*e.g*., methyl p-hydroxybenzoate (or "methylparaben") and propyl p-hydroxybenzoate (or "propylparaben")), sorbic acid, o-phenylphenol benzoic acid and the salts thereof, chlorobutanol, benzyl alcohol, thimerosal, phenylmercuric acetate and nitrate, nitromersol, benzalkonium chloride, and cetylpyridinium chloride.
[69] Contemplated stabilizers include, for example, chelating agents and antioxidants.
[70] Solid dosage forms also may comprise, for example, one or more excipients to control the release of the compounds. For example, it is contemplated that the compounds may be dispersed in, for example, hydroxypropylmethyl cellulose. Some oral dosage forms (*e.g*., tablets and pills) also may be prepared with enteric coatings.
[71] Topical dosage route uses, for example, a concentrated liquid or semi-liquid solution, suspension (aqueous or non-aqueous), emulsion (water-in-oil or oil-in-water), or microemulsion comprising a compounds dissolved, suspended, or emulgated in a pharmaceutically-acceptable liquid vehicle. In such embodiments, a crystallization inhibitor optionally may generally be present.
[72] Such a pour-on or spot-on formulation can be prepared by dissolving, suspending, or emulsifying the compounds of the combination in a suitable skin-fitted solvent or solvent mixture. Other excipients may be included as well, such as, for example, a surfactant, colorant, antioxidant, stabilizer, adhesive, etc. Contemplated solvents include, for example, water, alkanol, glycol, polyethylene glycol, polypropylene glycol, glycerin, benzyl alcohol, phenylethanol, phenoxyethanol, ethyl acetate, butyl acetate, benzyl benzoate, dipropylene glycol monomethyl ether, diethylene glycol monobutyl ether, acetone, methyl ethyl ketone, aromatic and/or aliphatic hydrocarbons, vegetable or synthetic oil, DMF, liquid paraffin, silicone, dimethylacetamide, N-methylpyrrolidone, or 2,2-dimethyl-4-oxy-methylene-1,3-dioxolane.
[73] In some embodiments, a topical formulation (particularly a pour-on or spot-on formulation) comprises a carrier that promotes the absorption or penetration of the compounds through the skin into the blood stream, other bodily fluids (lymph), and/or body tissue (fat tissue). Contemplated examples of dermal penetration enhancers include, for example, dimethylsulfoxide, isopropyl myristate, dipropylene glycol pelargonate, silicone oil, aliphatic esters, triglycerides, and fatty alcohols.
[74] Topical formulations also (or alternatively) may comprise, for example, one or more spreading agents. These substances act as carriers that assist in distributing an active ingredient over the animal recipient's coat or skin. They may include, for example, isopropyl myristate, dipropylene glycol pelargonate, silicone oils, fatty acid esters, triglycerides, and/or fatty alcohols. Various spreading oil/solvent combinations also may be suitable, such as, for example, oily solutions, alcoholic and isopropanolic solutions (*e.g*., solutions of 2-octyl dodecanol or oleyl alcohol), solutions of esters of monocarboxylic acids (*e.g*., isopropyl myristate, isopropyl palmitate, lauric acid oxalic ester, oleic acid oleyl ester, oleic acid decyl ester, hexyl laurate, oleyl oleate, decyl oleate, and caproic acid esters of saturated fatty alcohols having a carbon chain of 12 to 18 carbons), solutions of esters of dicarboxylic acids (*e.g*., dibutyl phthalate, diisopropyl isophthalate, adipic acid diisopropyl ester, and di-n-butyl adipate), or solutions of esters of aliphatic acids (*e.g*., glycols). When the formulation comprises a spreading agent, it also may be advantageous to include a dispersant, such as, for example, pyrrolidin-2-one, N-alkylpyrrolidin-2-one, acetone, polyethylene glycol or ether or ester thereof, propylene glycol, or synthetic triglycerides.
[75] When formulated in, for example, an ointment, it is contemplated that the compounds of the anthelmintic combination may be mixed with, for example, either a paraffinic or a water-miscible ointment base. When formulated in a cream, it is contemplated that the compounds may be formulated with, for example, an oil-in-water cream base. In some instances, the aqueous phase of the cream base includes, for example at least about 30% (w/w) of a polyhydric alcohol, such as propylene glycol, butane-1,3-diol, mannitol, sorbitol, glycerol, polyethylene glycol, or a mixture thereof.
[76] Injectable formulations may be prepared according to, for example, the known art using suitable solvents, solubilizing agents, protecting agents, dispersing agents, wetting agents, and/or suspending agents. Contemplated carrier materials include, for example, water, ethanol, butanol, benzyl alcohol, glycerin, 1,3-butanediol, Ringer's solution, isotonic sodium chloride solution, bland fixed oils (*e.g*., synthetic mono-or diglycerides), vegetable oil (*e.g*., corn oil), dextrose, mannitol, fatty acids (*e.g*., oleic acid), dimethyl acetamide, surfactants (*e.g*., ionic and non-ionic detergents), N-methylpyrrolidone, propylene glycol, and/or polyethylene glycols (*e.g*., PEG 400). Contemplated solubilizing agents include, for example, polyvinyl pyrrolidone, polyoxyethylated castor oil, polyoxyethylated sorbitan ester, and the like. Contemplated protecting agents include, for example, benzyl alcohol, trichlorobutanol, p-hydroxybenzoic acid ester, n-butanol, and the like.
[77] In some embodiments, a parenteral formulation is, for example, prepared from sterile powders or granules having one or more of the carriers materials discussed above for other formulations. The compounds are, for example, dissolved or suspended in a liquid comprising water, polyethylene glycol, propylene glycol, ethanol, corn oil, cottonseed oil, peanut oil, sesame oil, benzyl alcohol, sodium chloride, and/or various buffers. The pH generally may be adjusted, if necessary, with a suitable acid, base, or buffer.
[78] Other inert ingredients may generally be added to the composition as desired. To illustrate, it is contemplated that these may include, for example, lactose, mannitol, sorbitol, calcium carbonate, sodium carbonate, tribasic calcium phosphate, dibasic calcium phosphate, sodium phosphate, kaolin, compressible sugar, starch, calcium sulfate, dextro or microcrystalline cellulose, colloidal silicon dioxide, starch, sodium starch glycolate, crospovidone, microcrystalline cellulose, tragacanth, hydroxypropylcellulose, pregelatinized starch, povidone, ethylcellulose, hydroxypropylcellulose, hydroxypropylmethylcellulose, and methylcellulose.
[79] Further aspects regarding formulation of drugs and various excipients are found in, for example, Gennaro, A.R., et al., eds., Remington: The Science and Practice of Pharmacy (Lippincott Williams & Wilkins, 20th Ed., 2000). Another source regarding formulation of drugs and various excipients is found in, for example, Liberman, H. A., et al., eds., Pharmaceutical Dosage Forms (Marcel Decker, New York, N.Y., 1980).
[80] The concentration of the compounds of the anthelmintic combination according to this invention in the applied dosage form may vary widely depending on, for example, the dosage route. In general, the concentration is from about 1 to about 70% (by weight). In some such embodiments, for example, the concentration is from about 1 to about 50% (by weight), or from about 10 to about 50% (by weight). In other embodiments, the concentration is from about 35 to about 65% (by weight), from about 40 to about 60% (by weight), from about 45 to about 55% (by weight), or about 50% (by weight).
[81] In another aspect the present invention thus provides a pharmaceutical composition comprising an anthelmintically effective amount of a combination according to this invention and one or more pharmaceutically acceptable excipients.
[82] The formulation type chosen for a dosage form in any instance will depend upon the particular purpose envisaged and the physical, chemical and biological properties of the compounds of the combination according to this invention.
[83] The reduction of parasite numbers upon administration of the anthelmintic compounds of the combination according to the invention, especially gastrointestinal helminth parasites can be measured in-directly by faecal egg or differential larval counts. In this case the effective amount of the combination is determined by the reduction of the number of excreted helminth eggs or larvae in the faeces of the treated animal before and after treatment. For an *in vivo* administration the anthelmintic combination according to this invention, is preferably administered to an animal in an effective amount which is synonymous with "pharmaceutically effective amount" or "anthelmintically effective amount".
[84] Factors affecting the preferred dosage may include, for example, the parasite species infection to be treated and the development stages of the parasites, the type (*e.g*., species and breed), age, size, sex, diet, activity, and condition of the of the infected animal; the dosage route; pharmacological considerations, such as the activity, efficacy, pharmacokinetic, and toxicology profiles of the particular composition administered. Thus, the preferred amount of the anthelmintic combination according to this invention can vary, and, therefore, can deviate from the typical dosages set forth above. Determining such dosage adjustments is generally within the skill of those in the art.
[85] In addition to other active ingredients, it is contemplated that the anthelmintic combinations may be administered with one or more other compounds that beneficially affects, *e.g*. enhances or prolongs, the activity (or other characteristic, such as safety) of the compounds. For example, it is contemplated that the compounds may be administered with one or more synergists, such as, for example, piperonyl butoxide (PBO) and triphenyl phosphate (TPP). Other synergists include, for example, N-(2-ethylhexyl)-8,9,10-trinorborn-5-ene-2,3-dicarboxamide (also known as "ENT 8184" or "MGK 264") and Verbutin (also known as "MB-599").
[86] This invention also is directed to kits that are, for example, suitable for use in performing the methods of treatment described above. The kit comprises a therapeutically effective amount of an anthelmintic combination of this invention, and an additional component. The additional component(s) may be, for example, one or more of the following: another ingredient (*e.g*., an excipient or active ingredient), an apparatus for combining the compound of this invention with another ingredient and/or for administering the compound of this invention, or a diagnostic tool.
[87] The term "pharmaceutically acceptable" is used adjectivally to mean that the modified noun is appropriate for use in a pharmaceutical product. When it is used, for example, to describe a salt, solvate, N-oxide, active compound or excipient, it characterizes the salt, solvate, N-oxide, active compound or excipient as being compatible with the other ingredients of the composition, and not deleterious to the intended recipient animal, e.g. to the extent that the benefit(s) outweigh(s) the deleterious effect(s).
[88] The above detailed description of preferred embodiments is intended only to acquaint others skilled in the art with the invention, its principles, and its practical application so that others skilled in the art may adapt and apply the invention in its numerous forms, as they may be best suited to the requirements of a particular use. This invention, therefore, is not limited to the above embodiments, and may be variously modified.

### Experimental.

### [89] Determining efficacy against Haemonchus contortus in Jirds.

The anthelmintic effects of an anthelmintic combination comprising 2-[trans-4-(4-nitro-3-trifluoromethyl-phenylamino)-cyclohexyloxy]-1-[4-(4-trifluoromethyl-phenyl)-piperazin-1-yl]-ethanone (CAS-No. 1163267-91-1; compound A), prepared as described in WO 2009/077527, and fenbendazole (CAS-No. 43210-67-9; Sigma Aldrich; compound B) are tested *in vivo* using *Haemonchus contortus* in jirds (*Meriones unguiculatus; body weight of approximately 30 g*))*.*

Stock solutions of compound A (4 mg/ml) and compound B (0.2 mg/ml) are prepared in in DMF-premix (a mixture composed of dimethylformamide (85 g), emulsogen EL 360 (7 g) and gonapol UD 080 (3 g)). Treatment formulations are prepared composed of 10% DMF-premix, 10% of soy-oil and 80% NaCl solution (0.9% w/w).

L₃-larvae from *Haemonchus contortus,* derived from experimentally infected sheep, are suspended in 20 ml of EBSS solution (Earle's balanced salt solution) in a 100 ml Erlenmeyer flask and aerated with carbon dioxide for approximately 10 minutes.

Supernatant of the larvae suspension is decanted and larvae are resuspended in EBSS solution. The flask is locked and incubated in a shaking water bath at 38°C. At regular intervals (∼2 h) a sample of larvae suspension is taken to determine the exsheating rate of the larvae microscopically (20-100 fold magnification). When approximately 90% of the larvae are exsheated, the suspension is transferred to a 50 ml tube and filled up with tap water. After sedimentation of the larvae (~15 min) the supernatant is decanted, whereafter the larvae are counted and the number of larvae is adjusted with tap water to a number of approximately 7500 larvea/ml.

The jirds are orally infected with approximately 1500 third-stage larvae of *Haemonchus contortus* with a ball tipped canula. The inoculation volume will be approximately 0.25 ml. Ten days after infection, the jirds in the treatment groups are treated once orally with the treatment solutions, comprising various dosis of compound A (0.5 - 50 mg/kg bodyweight) in admixture with various dosis of compound B (0 - 2.5 mg/kg).

Three days after treatment, the jirds are necropsied, and the larvae burden in the stomach is determined. The efficacy is defined as the reduction of the mean larvae count in the jirds of the treatment groups in comparison to the infected jirds in the untreated negative control group.

## Claims

1. An anthelmintic combination comprising (1) an anthelmintic compound having the general formula (I) 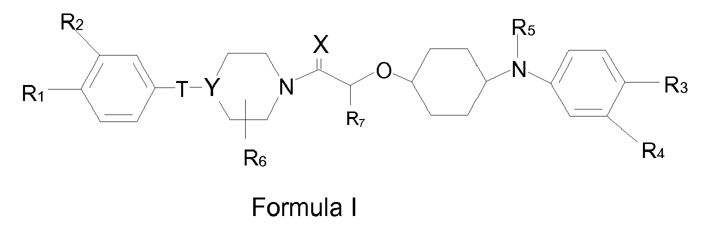 wherein
T is a bond and Y is N; or
T is NR₈ and Y is CH;
X is O or S;
R₁ is CF₃, OCF₃, CN or NO₂;
R₂ is H or CF₃;
R₃ is NO₂ or CN;
R₄ is CF₃;
R₅ is H or (C₁₋₃)alkyl;
R₆ optionally represents 1-4 methyl substituents;
R₇ is H or (C₁₋₃)alkyl;
R₈ is H or (C₁₋₃)alkyl
or a pharmaceutically acceptable salt thereof;
and (2) an anthelmintic benzimidazole carbamate selected from fenbendazole, albendazole (oxide), mebendazole, oxfendazole, parbendazole, oxibendazole, flubendazole and triclabendazole.

2. The anthelmintic combination of claim 1, wherein T is a bond and Y is N.

3. The anthelmintic combination of claim 1 or 2, wherein X is O and R₅ is H.

4. The anthelmintic combination of any one of claims 1-3, wherein R₁ is CF₃, R₃ is NO₂ and R₄ is CF₃.

5. The anthelmintic combination of claim 1 or 2, wherein the compound of Formula I is selected from 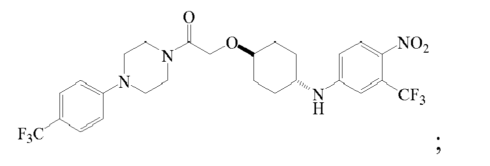 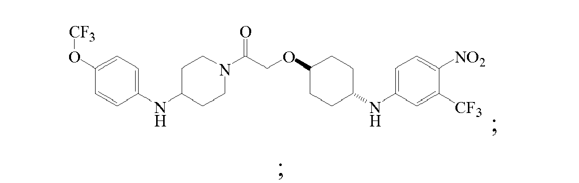 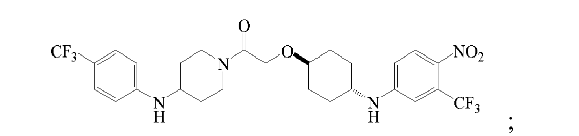 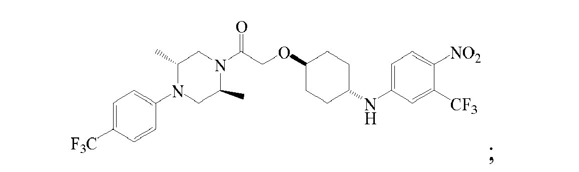 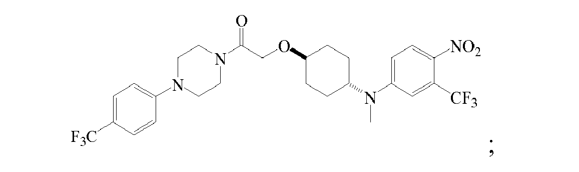 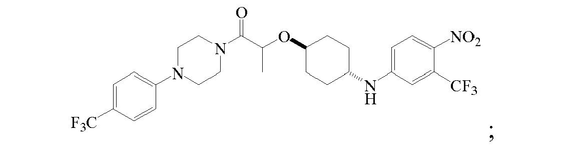 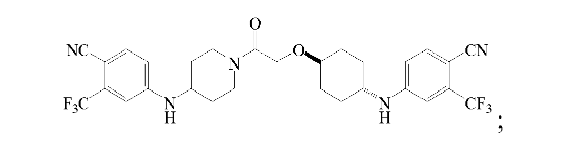 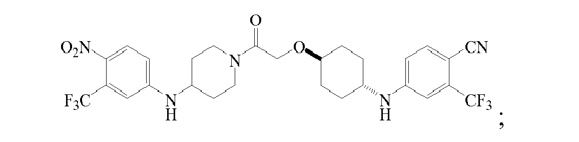 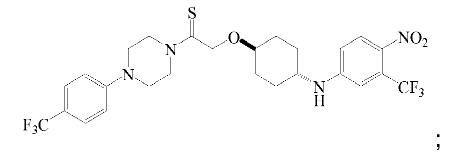 and 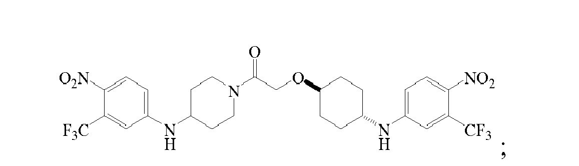 or a pharmaceutically acceptable salt thereof.

6. The anthelmintic combination of claim 1 or 2, wherein the compound of Formula I is 2-[*trans*-4-(4-nitro-3-trifluoromethyl-phenylamino)-cyclohexyloxy]-1-[4-(4-trifluoromethyl-phenyl)-piperazin-1-yl]-ethanone, or a pharmaceutically acceptable salt thereof.

7. The anthelmintic combination of any one of claims 1-6, wherein the anthelmintic benzimidazole carbamate is fenbendazole or triclabendazole.

8. An anthelmintic combination of any one of claims 1-7, comprising further active compounds against helminthes.

9. A method of treating a parasitic infection in an animal comprising administering to said animals an antihelminthically effective amount of an antihelmintic combination of any one of claims 1-8.

10. The method of claim 9, wherein the parasitic infection comprises a nematode infection.

11. The method of claim 9, wherein the parasitic infection comprises an infection by at least one of *Trichostrongylus axei, Trichostrongylus colubriformis, Haemonchus contortus, Ascaridia galli,* and *Oesophagostomum dentatum.*
